# EUROPEAN PATENT APPLICATION

(11) **EP 3 712 882 A1**
(43) Date of publication of application: **23.09.2020**
(21) Application number: 18895777.3
(22) Date of filing: 03.12.2018
(51) Int. Cl.: G09G 5/10

(54) **DISPLAY METHOD, DISPLAY DEVICE, ELECTRONIC APPARATUS AND COMPUTER-READABLE STORAGE MEDIUM**

(30) Priority: 29.12.2017 CN 201711484439
(71) Applicant: GUANGDONG OPPO MOBILE TELECOMMUNICATIONS CORP., LTD., Wusha, Chang'an Town Dongguan, Guangdong 523860 (CN)
(72) Inventor: ZHOU, Yibao, Dongguan Guangdong 523860 (CN); WANG, Xiaowei, Dongguan Guangdong 523860 (CN); QIAN, Yongjun, Dongguan Guangdong 523860 (CN)
(74) Representative: Manitz Finsterwald Patent- und Rechtsanwaltspartnerschaft mbB
(86) International application number: PCT/CN2018/118994
(87) International publication number: WO 2019/128634

(57) **Abstract**

A display method, comprising: upon detecting that a display screen (210) is in a lit state, acquiring a brightness of a first region; and on the basis of the brightness of the first region, adjusting the brightness of a second region. A distance between the first region and a border of the display region is greater than a distance between the second region and a border of the display region, and the second region comprises at least part of the pixels adjacent to the border of the display region.

## Description

### CROSS-REFERENCE TO RELATED APPLICATIONS

The present disclosure claims a priority to Chinese Patent Application No. 201711484439.6, titled of "DISPLAY METHOD, DISPLAY DEVICE, ELECTRONIC DEVICE, AND COMPUTER-READABLE STORAGE MEDIUM" and filed in National Intellectual Property Administration of China, and filed on December 29, 2017, the content of which is herein incorporated by reference in its entirety.

### TECHNICAL FIELD

The present disclosure generally relates to the technical field of terminal, in particular to a display method, a display device, an electronic device, and a computer-readable storage medium.

### BACKGROUND

There exists a black border on the boundary of a display screen of an electronic device. The black border becomes especially noticeable when the display screen is lit. For a display module with no black borders in an electronic device, light leakage is likely to occur at the edges of the ink window area of the display module when the display screen of the display module is lit.

### SUMMARY OF THE DISCLOSURE

Embodiments of the present disclosure provide a display method, a display device, an electronic device, and a computer-readable storage medium.

A display method, includes:
obtaining a brightness level of a first area in response to a display screen being in a screen-on state; wherein the display screen has a display area comprising the first area and a second area, the first area has a distance to a boundary of the display area greater than that of the second area, and the second area comprises at least part of pixels adjacent to the boundary of the display area; and
adjusting a brightness level of the second area to a target brightness level according to the brightness level of the first area.

A display device includes:
an obtaining module, configured for obtaining a brightness level of a first area when a display screen is in a screen-on state; wherein the display screen has a display area comprising the first area and a second area, the first area has a distance to a boundary of the display area greater than that of the second area, and the second area comprises at least part of pixels adjacent to the boundary of the display area; and
an adjusting module, configured for adjusting a brightness level of the second area to a target brightness value according to the brightness of the first area.

An electronic device includes a processor and a memory storing a computer program, when executed by the processor, causing the processor to perform a method.

A computer-readable storage medium stores a computer program, when executed by a processor, achieving a method.

### BRIEF DESCRIPTION OF THE DRAWINGS

In order to make the technical solution described in the embodiments of the present disclosure more clearly, drawings used for the description of the embodiments or related arts will be briefly described. Apparently, the drawings described below are only some embodiments, and, one skilled in the art may acquire other drawings based on these drawings, without making any inventive work.
FIG. 1 is a schematic diagram of an internal structure of an electronic device in some embodiments of the present disclosure.
FIG. 2 is a schematic structural diagram of a display module of an electronic device in some embodiments of the present disclosure.
FIG. 3 is a cross-sectional schematic diagram of the display module in FIG. 2.
FIG. 4 is a flowchart of a display method according to some embodiments of the present disclosure.
FIG. 5 is a flowchart of an operation of adjusting brightness in a display method according to some embodiments of the present disclosure.
FIG. 6 is a flowchart of a display method according to some specific embodiments of the present disclosure.
FIG. 7 is a structural block diagram of a display device according to some embodiments of the present disclosure.
FIG. 8 is a structural block diagram of a display device according to another some embodiments of the present disclosure.
FIG. 9 is a block diagram of a partial structure of a mobile phone related to an electronic device according to some embodiments of the present disclosure.

### DETAILED DESCRIPTION

In order to make objects, technical solutions, and advantages of the present disclosure clearer, the present disclosure is further described in detail with the accompanying drawings and the following embodiments. It is understood that the specific embodiments described herein are merely illustrative of the present disclosure, and not intended to limit the present disclosure.

It will be understood that the terms "first", "second" and the like, as used herein, may be used to describe various elements, but these elements are not limited by these terms. These terms are only used to distinguish one element from another. By way of example, without departing from the scope of the present disclosure, the first area is a second area, and similarly, a second area can be called as a first area. Both the first area and the second area are areas, but not the same area.

Embodiments of the present disclosure provide a display method, the method includes:
obtaining a brightness level of a first area in response to a display screen being in a screen-on state; wherein the display screen has a display area including the first area and a second area, the first area has a distance to a boundary of the display area greater than that of the second area, and the second area includes at least part of pixels adjacent to the boundary of the display area; and
adjusting a brightness level of the second area to a target brightness level according to the brightness level of the first area.

In some embodiments, the first area includes pixels at a geometric center of the display area, and the second area includes all pixels adjacent to the boundary of the display area.

In some embodiments, the second area includes the same number of rows or columns of pixels at two opposite sides of the display area, and rows or columns at the two opposite sides are symmetrical along a symmetry axis or another symmetry axis of the display area.

In some embodiments, the second area includes the same number of columns of pixels at the two opposite sides of the display area and the same number of rows of pixels at the another two opposite sides of the display area.

In some embodiments, the first area includes preset pixels adjacent to the second area.

In some embodiments, the second area includes at least three columns or rows of pixels, and the second area has a stepwise decrease on brightness levels of the at least three columns or rows in a direction from the geometric center of the display area to the boundary of the display area.

In some embodiments, the second area includes the same number of columns and rows, and pixels in the second area that have a same distance to the boundary of the display area have a same brightness level.

In some embodiments, brightness levels of columns or rows of pixels in the second area are sequentially decreased in an order of time.

In some embodiments, sequentially-decreasing brightness levels columns or rows of pixels in the second area in the order of time includes:
sequentially-decreasing brightness levels of columns in a horizontal direction at a first preset time interval according to the brightness of the first area; and
sequentially-decreasing brightness levels of rows in a vertical direction at a second preset time interval according to the brightness of the first area.

In some embodiments, the second area includes the same number of columns and rows, and brightness levels of pixels in the second area that have a same distance to the boundary of the display area are decreased simultaneously.

In some embodiments, the brightness level of the first area and brightness levels of rows or columns in the second area is in an equal proportional relationship.

In some embodiments, the brightness level of the first area and brightness levels of rows or columns in the second area are in an arithmetic relationship.

In some embodiments, the method further includes:

increasing the target brightness level in response to the brightness level of the first area being increased; and

decreasing the target brightness level in response to the brightness level of the first area being decreased.

In some embodiments, brightness levels of rows or columns of pixels in the second area are sequentially decreased in the direction from the geometric center of the display area to the boundary of the display area.

In some embodiments, the target brightness level is a preset ratio of the brightness of the first area to which the brightness level of the first area is decreased.

In some embodiments, the target brightness level is a preset fixed level to which the brightness level of the first area is decreased.

In some embodiments, the obtaining the brightness level of the first area includes:
obtaining brightness levels of all pixels in the first area one by one, wherein an average of the brightness levels of all pixels in the first area is set as the brightness level of the first area.

Embodiments of the present disclosure provide a display device, which includes:
a detecting module, configured for detecting whether a display screen is in a screen-on state; wherein the display screen has a display area including the first area and a second area, the first area has a distance to a boundary of the display area greater than that of the second area, and the second area includes at least part of pixels adjacent to the boundary of the display area;
an obtaining module, configured for obtaining a brightness level of a first area when; and
an adjusting module, configured for adjusting a brightness level of the second area to a target brightness level according to the brightness of the first area.

Embodiments of the present disclosure provide an electronic device including a processor and a memory storing a computer program. When executed by the processor, the computer program causes the processor to perform operations of a method.

Embodiments of the present disclosure provide a computer-readable storage medium storing a computer program. When executed by a processor, operations of a method are achieved.

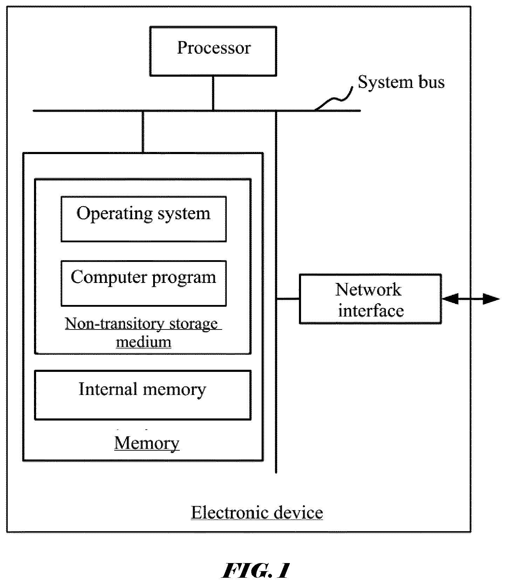

FIG. 1 is a schematic diagram of an internal structure of an electronic device in some embodiments. As shown in FIG. 1, the electronic device includes a processor, a memory, and a network interface connected through a system bus. The processor is used to provide computing and control capabilities to support operations of the entire electronic device. The memory is used to store data, programs, etc. The memory stores at least one computer program, and the computer program can be executed by the processor to implement the display method for electronic devices according to embodiments of the present disclosure. The memory may include a non-volatile storage medium such as a magnetic disk, an optical disk, a read-only memory (ROM), or a random-access memory (RAM). For example, in some embodiments, the memory includes a non-transitory storage medium and an internal memory. The non- transitory storage medium stores an operating system and computer programs. The computer program can be executed by the processor to implement a display method in the following embodiments. The internal memory provides a cached operating environment for the operating system and computer programs in the non-volatile storage medium. The network interface may be an Ethernet card or a wireless network card, etc., which is used to communicate with external computers. The electronic device may be a mobile phone, a tablet computer, a personal digital assistant or a wearable device.

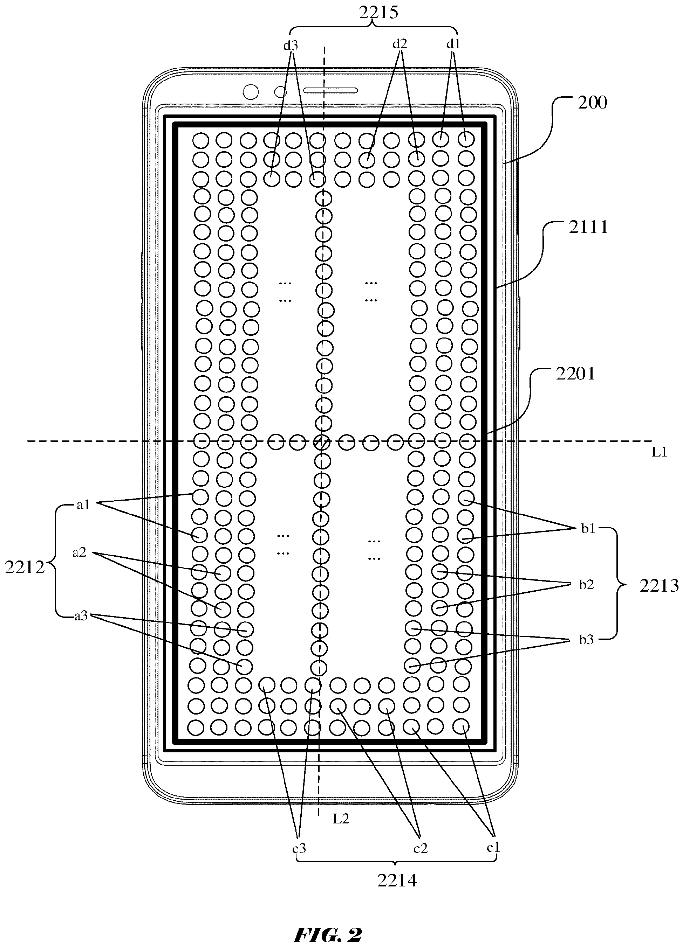

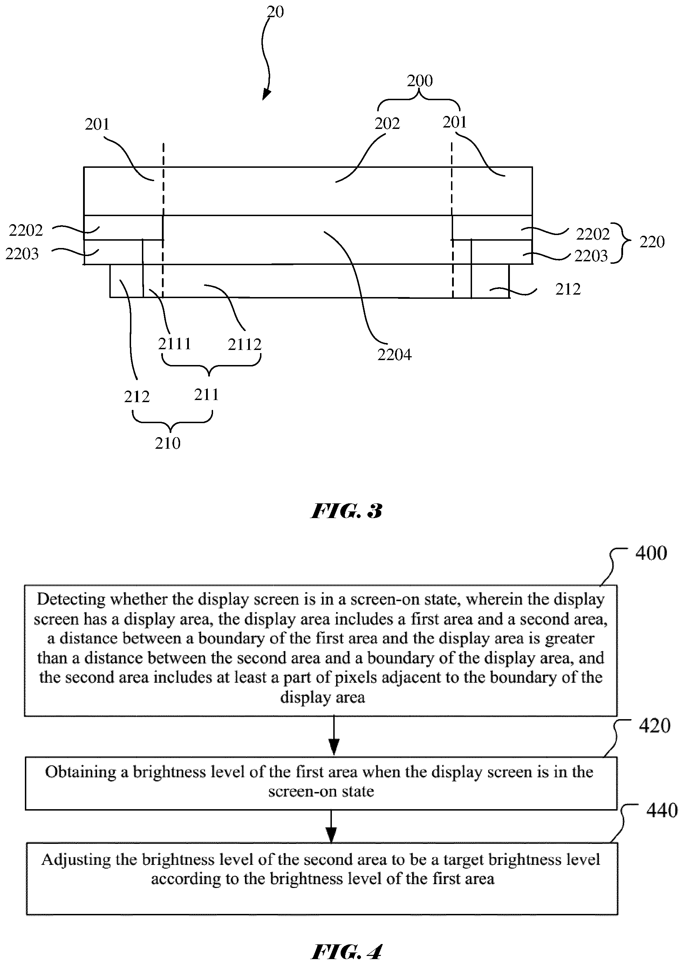

FIG. 2 is a schematic structural view of a display module of an electronic device in some embodiments of the present disclosure, and FIG. 3 is a cross-sectional view of the display module of FIG. 2. As shown in FIGS. 2 and 3, the display module mainly includes a cover 200 and a display screen 210 connected to the cover 200.

The display screen 210 may be an LCD (Liquid Crystal Display) or OLED (Organic Light-Emitting Diode) display. The display screen 210 includes a pixel area 211 and a non-pixel area 212. The non-pixel area 212 is also called as a BM (Black Matrix) area. Pixels in the pixel area 211 (objects indicated by small circles in FIG. 2) can be lit up to emit lights and is used to display images. A control circuit structure is provided in the non-pixel area 212. The control circuit structure is used to control pixels in the pixel area 211 to emit light. The non-pixel area 212 cannot emit light.

The cover 200 and the display screen 210 are stacked. For example, the cover 200 is bonded to the display screen 210 through an OCA (Optically Clear Adhesive) layer. An ink layer 220 is printed on a side of the cover 200 close to the display screen 210. An area enclosed by an inner edge 2201 of the ink layer 220 is an ink window area 2204. That is, the area can be observed when the display screen of the electronic device is in a screen-on state. The ink layer 220 includes a black ink layer 2202 and a white ink layer 2203 which are stacked. The cover 200, the black ink layer 2202, and the white ink layer 2203 are stacked successively. Two ink layers are shown in an embodiment of FIG. 3. It can be understood that the number of ink layers may be changed as needed in other embodiments. For example, another black ink layer may be arranged under the white ink layer 2203.

Due to the ink layer 220, the cover 200 includes a transparent portion 202 and a frame portion 201. That is, a portion of cover 200 that is covered by the ink layer 220 is the frame portion 201, and the transparent portion 202 overlaps with the ink window area 2204. In some embodiments, the transparent portion 202 may be substantially rectangular, and the frame portion 201 may be substantially ring-shaped. Lights emitted from the display screen 210 cannot be transmitted through the frame portion 201. Therefore, the user cannot see an image displayed on the display screen 210 from the frame portion 201. The transparent part 202 is light transmissive. Lights emitted from the display screen 210 can be transmitted from the transparent part 202, and the user can see the image displayed on the display screen 210 at the transparent part 202.

In general, a vertical projection of the frame portion 201 on the display screen 210 covers the whole non-pixel area 212. In some embodiments, the pixel area 211 is larger than the ink window area. That is, a vertical projection of the frame portion 201 on the display screen 210 also covers a part of the pixel area 211, so that the pixel area 211 includes a first display area 2112 and a blocked area 2111. The blocked area 2111 is an area of the pixel area 211 which is blocked by the frame portion 201. The first display area 2112 refers to an area that can be observed by the user through the ink window area from the transparent portion 202 of the cover 200 when the display screen is in the screen-on state. A boundary of the first display area 2112 is the inner edge 2201 of the ink layer 220 or a boundary between the frame portion 201 and the transparent portion 202.

The pixel area 211 generally is expanded by 0.2 mm from the ink window area. In some embodiments, a boundary of the pixel area 211 is expanded by 0.15 mm or other values from a boundary of the ink window area.

When the display screen 210 is lit, light leakage is likely to occur at the boundary between the transparent portion 202 and the frame portion 201, which adversely affects the display effect of the display module.

For the above problem, FIG. 4 illustrates a flowchart of a display method in some embodiments of the present disclosure. The method includes operations in the following.

At operation 400, the method detects whether the display screen is in a screen-on state. The display screen has a display area. The display area includes a first area and a second area. A distance between a boundary of the first area and the display area is greater than a distance between the second area and a boundary of the display area, and the second area includes at least a part of pixels adjacent to the boundary of the display area.

The first area is a sub-area acquired in the display area of the display screen. The first area includes pixels preset in the display area. As the distance between the first area and the boundary of the display area is greater than the distance between the second area and the boundary of the display area, the first area is closer to the geometric center of the display area than the second area. Pixels in the first area are not overlapped with pixels in the second area. Further, the first area includes pixels in the geometric center of the display area. As shown in FIG. 2, for example, X ^{∗} Y pixels containing pixels 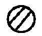 in the geometric center of the display area, where X represents the number of rows of pixels, which means the number of rows of contained pixels, and Y represents the number of columns of pixels, which means the number of columns of contained pixels, X ≧ 1, and Y ≧ 1. 3 ^{∗} 5 represents 3 rows of pixels and 5 columns of pixels including pixels 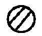 at the geometric center of the display area.

The second area includes at least a portion of pixels adjacent to the boundary of the display area. That is, the second area includes at least a portion of preset pixels which are located inside the boundary of the display area. The inside of the boundary refers to a side close to the geometric center in a direction from the boundary of the display area to the geometric center of the display area. For example, as shown in FIG. 2, in the direction from the boundary of the display area to the geometric center of the display area, there are following situations where the second area includes preset pixels of the display area. The second area includes the first column of pixels adjacent to a first side-boundary 2212 of the display area, the first column of pixels adjacent to the first side-boundary 2212 of the display area and the second column of pixels adjacent to the first column, or the first to third columns of pixels adjacent to the first side-boundary 2212 of the display area. Similarly, these situations may also be applied for a second side-boundary 2213, a third side-boundary 2214, and a fourth side-boundary 2215 of the display area.

Whether the display screen of the electronic device is in a screen-on state is detected in the electronic device. For the Android system, this can be determined by calling interfaces provided by the PowerManager in the electronic device. For example, the electronic device can determine that the display screen of the electronic device is in a screen-on state when the wakeup interface of PowerManager is in a being-called state, and the electronic device can determine that the display screen is in a screen-off state when the gotoSleep interface of PowerManager is in a being-called state.

At operation 420, the method obtains a brightness level of the first area when the display screen is in the screen-on state.

The brightness level refers to the intensity of image pixels, black is the darkest, white is the brightest, black is represented by 0, and white is represented by 255. Taking the RGB (Red, Green, and Blue) color mode as an example, a pixel is basically represented by three color components of RGB. The so-called "how much" of RGB refers to the brightness level, and is expressed by an integer. Generally, RGB each has 256 levels of brightness, which are expressed by 0, 1, 2, ... , 255. Note that although the highest is 255, 0 is also one of the values, and so there are 256 levels totally. 256 levels of brightness for each may be expressed as R (0-255), G (0-255), B (0-255). RGB is designed based on the principle of color luminescence. In popularly terms, its color mixing manner is similar to that there are three lamps of red, green, and blue. When lights of these lamps overlap, colors are mixed, but the brightness is equal to a sum of two levels of brightness, the more the colors are mixed, and the higher the brightness, which means additive mixing. For a superposition case of the three lamps of red, green, and blue, the brightest superposition area of the three colors at the center is white. The additive mixing has a characteristic that the more superimposed, and the brighter. Each of the red, green, and blue color channels has 256 levels of brightness. The "lamp" is the weakest at 0, which means it is turned off, and the "lamp" is the brightest at 255. When gray values of the three-color are same, gray tone with different gray values is generated. That is, it is the darkest black tone when the gray values of the three colors are 0, and it is the brightest white tone when the gray values of the three colors are 255.

In general, the brightness level of an entire screen will not be completely consistent, and there will be unevenness, but the front unevenness of the brightness will be greater than 85%, so the average brightness level of the pixels in the first area of the display area can be obtained as the brightness level of the first area.

In the Android system, the brightness level of the display area can be obtained by the function getScreenBrightness (Activity activity). In the iPhone Operating System (iOS), the brightness level of the display area can be obtained by the function [UIScreen mainScreen] .brightness.

When the electronic device detects that the display screen is in a screen-on state, for example, for an Android system, when the electronic device detects that the wakeup interface of PowerManager is in the being-called state, the electronic device determines that the display screen is in the screen-on state. The electronic device then obtains the brightness level of the screen by using the function getScreenBrightness (Activity activity). For the iOS system, the corresponding API (Application Programming Interface) can also be called to detect whether the display screen is in the screen-on state.

Further, the brightness level of each pixel included in the first area may be acquired respectively, and the average value of the brightness levels of all pixels in the first area may be taken as the brightness level of the first area .

At operation 440, the method adjusts the brightness level of the second area to be a target brightness level according to the brightness level of the first area.

The electronic device adjusts the brightness level of the second area to be a target brightness level according to the brightness level of the first area . For example, the target brightness level is a preset ratio of the brightness level of the first area , for example, the target brightness level is 80%, 70%, or 60% of the brightness level of the first area . Thus, the brightness level of the second area is reduced, which effectively reduces the influence of light leakage at the edge of the ink window area of the display module on the display effect.

In some embodiments, the second area includes all pixels adjacent to the boundary of the display area. That is, the second area includes all pixels on the inner periphery of the display area. The inner periphery is around the boundary of the display area. For example, as shown in FIG. 2 continuedly, the second area includes the first column of pixels of the first side-boundary 2212, the first column of pixels of the second side-boundary 2213, and the first row of pixels of the third side-boundary 2214, and the first row of pixels of the fourth side-boundary 2215 of the display area. The above example is only for explaining the technical solution of the present disclosure, and does not limit the technical solution of the present disclosure. The second area may include more pixels or fewer pixels on the basis of the above pixels, all of which are in range of the technical solution of the present disclosure.

In some embodiments, the second area includes the same number of rows or columns of pixels at opposite sides of the display area. The rows at two opposite sides are symmetrically distributed along a symmetry axis of the display area, and the columns on another two opposite sides are symmetrically distributed along another symmetry axis of the display area. That is, the second area includes pixels in the same number of rows or pixels in the same number of columns on respective opposite sides, and the pixels at the respective opposite sides are symmetrically distributed along a symmetry axis of the display area. For example, as shown in FIG. 2 again, L1 and L2 are symmetry axes of the display area, a1, a2, a3, b1, b2, and b3 represent a column, respectively, and c1, c2, c3, d1, d2, and d3 represent a row, respectively. In the direction from the boundary of the display area to the geometric center of the display area, the preset pixels of the display area that the second area contains may be two columns a1 and a2 of pixels adjacent to the first side-boundary 2212 and two columns b1 and b2 of pixels adjacent to the second side-boundary 2213, or three columns a1, a2, a3 of pixels adjacent to the first side 2212 boundary and three columns b1, b2, b3 of pixels adjacent to the second side-boundary 2213. Alternatively, the preset pixels of the display area that the second area contains may be two rows c1 and c2 of pixels adjacent to the third side-boundary 2214 and two columns d1 and d2 of pixels adjacent to the fourth side-boundary 2215. Alternatively, the second area includes pixels adjacent to the first side-boundary 2212 and pixels adjacent to the second side -boundary 2213, and pixels adjacent to the third side -boundary 2214 and pixels adjacent to the fourth side -boundary 2215. Therefore, the same display effect is achieved at opposite sides, and the display effect of the display screen is improved.

In some embodiments, the second area includes same rows and same columns of pixels at respective two opposite sides of the display area. That is, the number of rows of preset pixels in the second area at the inside of the boundary of the display area is same with the number of columns of the preset pixels. For example, as shown in FIG. 2, the preset pixels of the display area that the second area contains may be pixels adjacent to the first side-boundary 2212, pixels adjacent to the second side-boundary 2213, pixels adjacent to the third side-boundary 2214, and pixels adjacent to the fourth side-boundary 2215. The number of columns of the pixels adjacent to the first side-boundary 2212, the number of columns of the pixels adjacent to the second side-boundary 2213, the number of rows of the pixels adjacent to the second side-boundary 2213, and the number of rows of the pixels adjacent to the fourth side-boundary 2215 are same, and relative positions of the pixels are same. That is, a respective column of pixels and a respective row of pixels have a same distance to a corresponding side-boundary. For example, the preset pixels of the display area that the second area contains may be two rows a1 and a2 of pixels adjacent to the first side-boundary 2212, two columns b1 and b2 of pixels adjacent to the second side-boundary 2213, two rows c1 and c2 of pixels adjacent to the third side-boundary 2214, and two columns d1 and d2 of pixels adjacent to the fourth side-boundary 2215. The same display effect is achieved around the display area, and the display effect of the display screen is improved.

In some embodiments, the first area includes preset pixels adjacent to the second area . That is, the first area includes preset pixels at a boundary of the second area. As shown in FIG. 2, if the second area includes two columns a1 and a2 of pixels adjacent to the first side-boundary 2212, the first area includes a column a3 of pixels. Similarly, if the second area includes two rows c1 and c2 of pixels adjacent to the third side-boundary 2214, the first area includes a row c3 of pixels. These similar situations may also be applied for the second side-boundary 2213 and the fourth side-boundary 2215of the display area. The brightness level of the second area is adjusted from the brightness level of the first area according to a preset rule, so that the brightness level of pixels adjacent to the boundary of the display area of the display screen can have a smoothly-transition according to the brightness level of the first area , which reduces effect of a too large brightness difference on the display effect.

The electronic device acquires the brightness level of the first area , and reduces the brightness level of the second area to a target brightness level according to the acquired brightness level of the first area . The target brightness level is a certain brightness level reduced from the brightness level of the first area , so as to reduce the brightness level of pixels adjacent to the boundaries of the display area. Thus, the influence of light leakage is reduced. Specifically, an IC chip (Integrated Circuit) of the display screen may be used to control in the electronic device, and the IC chip may control the brightness level of each pixel in the entire display area. The IC chip is that an integrated circuit formed by a large number of microelectronic components (transistors, resistors, capacitors, etc.) is disposed on a plastic substrate such that the chip is formed.

In some embodiments, the target brightness level is a preset ratio of the brightness level of the first area which is decreased from the brightness level of the first area . For example, the target brightness level may be 90%, 80%, 70%, or 60% of the brightness level of the first area . Thus, the visual effect of the entire screen is not affected, and the effect of light leakage at the edges of the display area of the display screen on the display effect is reduced.

In another some embodiments, the target brightness level is a preset fixed value decreased from the brightness level of the first area . For example, if the brightness level of the first area is 220 nits (nit is a unit of brightness, 1nit = 1 cd / m²), the target brightness level is 180 nits which is reduced by 40 nits from the brightness level of the first area . That is, the brightness level of pixels in the second area is decreased to 180 nits. Alternatively, the target brightness level is 200 nits which is decreased by 20 nits from the brightness level of the first area . That is, the brightness level of pixels in the second area is decreased to 220 nits.

In the display method of a display screen according to embodiments of the present disclosure, the method decreases the brightness level of pixels near the edges of the display area of the display screen and then reduces adverse effect of light leakage at the edges of the ink window area on the display effect.

In some embodiments, the second area includes at least three columns of pixels or at least three rows of pixels, and the brightness level of the second area is decreased row by row or column by column in the direction from the geometric center of the display area to the boundary of the display area.

The second area includes at least three rows of pixels, or the second area includes at least three columns of pixels, and the second area has a stepwise decrease on brightness levels of the at least three columns or rows in a direction from the geometric center of the display area to the boundary of the display area. As shown in FIG. 2 again, for example, if the second area includes 10 columns of pixels adjacent to the first side-boundary 2212, the 10 columns of pixels may be divided. Brightness levels of pixels from the 1^{th} to 5^{th} columns are reduced to a target brightness level, and the brightness levels of pixels from the 6^{th} to 10^{th} columns are reduced to another target brightness level. Alternatively, the brightness levels of pixels from the 1^{th} to 3^{th} columns are reduced to a target brightness level, the brightness levels of pixels from the 3^{th} to 5^{th} columns are reduced to another target brightness level, the brightness levels of pixels in the 6^{th} to 8^{th} columns are reduced to yet another target brightness level, etc. These similar situations can also be applied for the second side-boundary 2213, the third side-boundary 2214, and the fourth side-boundary 2215 of the display area.

Further, the target brightness level and the brightness level of the first area have a preset proportional relationship, and the brightness level of the second area is decreased row by row or column by column in the direction from the geometric center of the display area to the boundary of the display area. The brightness levels of pixels closest to the boundary of the display area can be reduced to 20% or even 10% of the brightness level of the first area . As due to the brightness levels of the pixels are decreased, the effect of light leakage can be reduced. As shown in FIG. 2 continuedly, for example, in the horizontal direction, taking columns as an example, if the second area includes 10 columns of pixels adjacent to the first side-boundary 2212 and arranged successively in the direction from the geometric center of the display area to the boundary of the display area with numbers 1, 2, 3 ... 10, the 10 columns of pixels can be divided, where brightness levels of pixels from columns 1 to 5 are reduced to a target brightness level, and brightness levels of pixels in columns 6 to 10 are reduced to another target brightness level. For example, brightness levels of pixels from columns 1 to 5 are reduced to 80% of the brightness level of the first area , and the brightness levels of pixels in columns 6 to 10 are reduced to 60% of the brightness level of the first area . Alternatively, brightness levels of pixels in columns 1-3 are reduced to 90% of the brightness level of the first area , brightness levels of pixels in columns 3-5 are reduced to 70% of the brightness level of the first area , brightness levels of pixels in columns 6-8 are reduced to 50% of the brightness level of the first area , etc. The brightness levels of the pixels are gradually reduced near the boundary of the display area , so as to reduce the influence of light leakage. Similar situations can also be applied for the second side-boundary 2213, the third side-boundary 2214, and the fourth side-boundary 2215 of the display area.

In some embodiments, the second area includes the same number of columns and rows, and pixels in the second area that has a same distance to the boundary of the display area have a same brightness. That is, the second area includes the same number of columns and rows around the display area, and pixels in a row and a column having a same distance to the boundary of the display area have the same brightness. For example, target brightness levels of pixels in the second area having a same distance to the boundary of the display area are 80% or 70% of the brightness level of the first area . As shown in FIG. 2 again, if the second area includes 10 columns of pixels adjacent to the first side-boundary 2212 and arranged successively in the direction from the geometric center of the display area to the boundary of the display area with numbers 1, 2, 3 ... 10, brightness levels of pixels in columns 1-3, 4-6, and 7-9 are respectively decreased to different target brightness levels. And the second area includes 10 rows of pixels adjacent to the third side-boundary 2214 and arranged successively in the direction from the geometric center of the display area to the boundary of the display area with numbers 1, 2, 3 ... 10, brightness levels of pixels in rows 1-3, 4-6, and 7-9 are respectively decreased to different target brightness levels. The target brightness level to which brightness levels of pixels in columns 1-3 are decreased is same with that of rows 1-3, such as 80% of the brightness level of the first area , the target brightness level to which brightness levels of pixels in columns 4-6 are decreased is same with that of rows 4-6, such as 60% of the brightness level of the first area , and the target brightness level to which brightness levels of pixels in columns 7-9 are decreased is same with that of rows 7-9, such as 40% of the brightness level of the first area . Thus, pixels at a respective location in the second area have same brightness change, which makes the display effect of the entire display screen consistent and improves the display effect of the display screen.

In some embodiments, brightness levels of columns or rows of pixels in the second area are sequentially decreased in an order of time. The operation of sequentially-decreasing the brightness levels of columns or rows of pixels in the second area may include the following.

The brightness levels of columns in a horizontal direction in the second area are sequentially decreased at a first preset time interval according to the brightness level of the first area.

The brightness levels of rows in a vertical direction in the second area are sequentially decreased in units of rows in the vertical direction at a second preset time interval according to the brightness level of the first area .

Further, the second area includes the same number columns and rows, and brightness levels of pixels having a same distance to the boundary of the display area are decreased simultaneously.

The second area includes the same number of columns and rows, and the brightness levels of pixels having a same distance to the boundary of the display area are decreased simultaneously. That is, the first preset time interval and the second preset time interval can be the same. In other embodiments, the first preset time interval and the second preset time interval may also be different. For example, the first preset time interval and the second preset time interval are both 0.3 second or 0.5 second. Alternatively, the first preset time interval is 0.3 second, and the second preset time interval is 0.5 second. Alternatively, the first preset time interval is 0.5 second, and the second preset time interval is 0.3 second. As the first preset time interval and the second preset time interval are the same, and brightness level of pixels of the display area near the boundary of the display area is adjusted at the same time, synchronized adjustment of the display effect of the display screen is achieved, which improves the display effect of the display.

As shown in FIG. 2 again, if the second area of the electronic device includes 9 columns of pixels adjacent to the first side-boundary 2212 and arranged sequentially in the direction from the geometric center of the display area to the boundary of the display area with numbers 1, 2, 3 ... 9, columns 1 to 3 of pixels, columns 4 to 6 of pixels, and columns 7 to 9 of pixels are adjusted. During a process where brightness level of pixels in the second area , brightness levels of columns 1 to 3 of pixels are 100% of the brightness level of the first area , brightness levels of columns 4 to 6 of pixels are 80% of the brightness level of the first area after 0.5 second, and brightness levels of columns 7 to 9 of pixels are 60% of the brightness level of the first area after another 0.5 second. The similar situation can also be applied for the second side-boundary 2213, the third side-boundary 2214, and the fourth side-boundary 2215 of the display area. The brightness level of adjacent pixels in the same row or the same column has same decreasing degree, and the brightness level of pixels in different rows or different columns is sequentially decreased in the direction from the geometric center of the display area to the boundary of the display area. Thus, the brightness levels of pixels at edges of the display area of the display screen can have a smoothly-transition according to the brightness level of the first area , which reduces effect of a too large brightness difference on the display effect.

It can be seen that the brightness levels of the preset number of columns of pixels in the second area in the horizontal direction are sequentially decreased at the first preset time interval, or the brightness levels of the preset number of rows of pixels in the second area in the vertical direction are sequentially decreased at the second preset time interval. Meanwhile, the brightness levels of adjacent pixels in the preset number of rows or the preset number of columns has same decreasing degree, and the brightness levels of different preset numbers of rows or different preset numbers of columns of pixels are sequentially decreased in the direction from the geometric center of the display area to the boundary of the display area. Thus, the brightness at edges of the display area of the display screen can have a sequential and smooth transition, which reduces effect of a too large brightness difference on the display effect.

In some embodiments, the operation of sequentially-decreasing the brightness levels of columns or rows of pixels in the second area may include the following.

The brightness levels of columns in a horizontal direction in the second area are sequentially decreased at a first preset time interval according to the brightness level of the first area.

The brightness levels of rows in a vertical direction in the second area are sequentially decreased in units of rows in the vertical direction at a second preset time interval according to the brightness level of the first area .

As shown in FIG. 2 again, if the second area of the electronic device includes three columns of pixels adjacent to the first side-boundary 2212 and arranged sequentially in the direction from the geometric center of the display area to the boundary of the display area with numbers 1, 2, 3, then during a process where brightness level of pixels in the second area , brightness level of column 1 of pixels is 100% of the brightness level of the first area , brightness level of column 2 of pixels is 80% of the brightness level of the first area after 0.5 second, and brightness level of column 3 of pixels is 60% of the brightness level of the first area after another 0.5 second. The similar situation can also be applied for the second side-boundary 2213, the third side-boundary 2214, and the fourth side-boundary 2215 of the display area.

In the case where each row or each column is adopt as a unit, the brightness levels of adjacent pixels in the same row or the same column has same decreasing degree, and the brightness levels of pixels in different rows or different columns are sequentially decreased in the direction from the geometric center of the display area to the boundary of the display area. This can reduce a brightness difference of row-to-row pixels or column-to-column pixels, and then brightness level of pixels at edges of the display area of the display screen can have more smooth transition, which reduces effect of a too large brightness difference on the display effect.

In some embodiments, the brightness level of the first area and brightness levels of rows or columns in the second area are in an equal proportional relationship . A target brightness level of each pixel row or each pixel column of the second area and the brightness level of the first area have a preset equal proportional relationship for decreases. For example, the equal proportional relationship between each of the target brightness levels and the brightness level of the first area is sequentially-decrease by 10%, or the equal proportional relationship between each of the target brightness levels and the brightness level of the first area is sequentially-decrease by 20%, etc.

In some embodiments, the brightness level of the first area and brightness levels of rows or columns in the second area are in an arithmetic relationship. For example, in a common case, RGB each has 256 levels of brightness, represented by numbers 0, 1, 2 ... up to 255. The target brightness levels may be sequentially decreased by a preset level from the brightness level of the first area . For example, the target brightness levels may be sequentially reduced by 2 levels from the brightness level of the first area , or the target brightness levels may be sequentially decreased by 4 levels from the brightness level of the first area .

In the display method according to embodiments of the present disclosure, the method adjusts the brightness level of pixels in the display area of the display screen and near the boundaries of the display area, so that the closer pixels are near a respective boundary of the display area, the lower the brightness level of the pixels is. This avoids the light leakage in the ink window area having effects on the display effect of the display screen

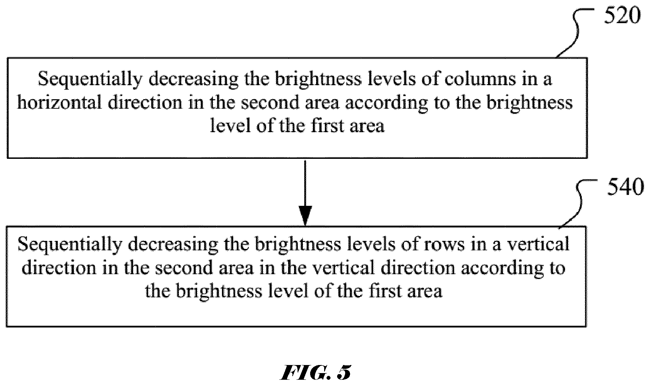

In some embodiments, as shown in FIG. 5, which illustrates a flowchart of an operation of adjusting brightness in display method according to some embodiments of the present disclosure, the adjusting the brightness level of the second area to a target brightness level according to the brightness level of the first area includes the following.

At operation 520, the brightness levels of columns in a horizontal direction in the second area are sequentially decreased according to the brightness level of the first area .

At operation 540, the brightness levels of rows in a vertical direction in the second area are sequentially decreased in the vertical direction according to the brightness level of the first area.

The electronic device sequentially decreases brightness level of a respective column of pixels in the second area to a corresponding target brightness level in the horizontal direction of the second area , and sequentially decreases brightness level of a respective row of pixels in the second area to a corresponding target brightness level in the vertical direction of the second area . As shown in FIG. 2 again, if the second area of the electronic device includes three columns of pixels adjacent to the first side-boundary 2212 and arranged sequentially in the direction from the geometric center of the display area to the boundary of the display area with numbers 1, 2, 3, then brightness level of column 1 of pixels is 100% of the brightness level of the first area , brightness level of column 2 of pixels is 80% of the brightness level of the first area , and brightness level of column 3 of pixels is 60% of the brightness level of the first area . The similar situation can also be applied for the second side-boundary 2213, the third side-boundary 2214, and the fourth side-boundary 2215 of the display area.

In some embodiments, the method further includes actions/operations in the following.

The method increases the target brightness level correspondingly when it is detected that the brightness level of the first area is increased.

The method decreases the target brightness level correspondingly when it is detected that the brightness level of the first area is decreased.

No matter whether users' manually-adjusting screen brightness or a system's automatically-adjusting screen brightness, and whether that the brightness level of the pixels of the display screen is increased or that the brightness level of the pixels of the display screen is decreased, once the electronic device detects that brightness level of the display screen is changed, the electronic device adjusts the brightness level of the second area correspondingly in the manner of adjusting the brightness level of the second area in foregoing embodiments. When detecting that the brightness level of the first area is increased, the electronic device correspondingly increases the brightness level of the second area , and when detecting that the brightness level of the first area is decreased, the electronic device correspondingly decreases the brightness level of the second area . The brightness level of the second area is adjusted as the brightness level of the first area is changed. Thus, dynamically adjustment is achieved for the brightness level of the pixels in the display area of the display screen, and a smooth transition is achieved for screen brightness, which avoids too large brightness difference among pixels in the second area and between the first area and the second area of the display screen, and affects the display effect of the screen.

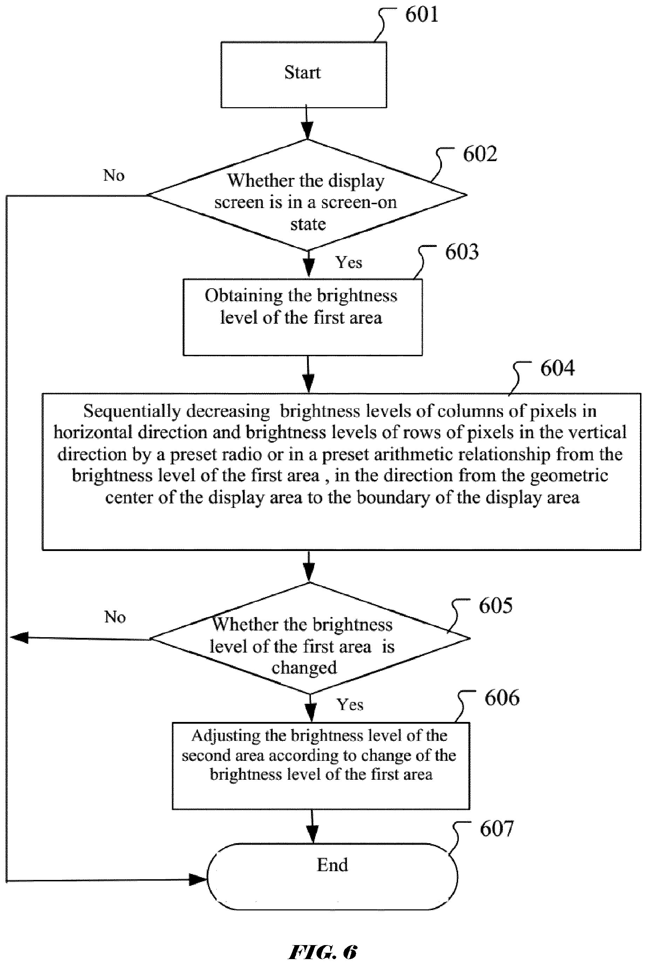

FIG. 6 is a flowchart of a display method according to some specific embodiments of the present disclosure. The method includes actions/operations in the following.

At operation 601, the electronic device starts to detect. For example, after the electronic device restarts, start to regularly detect a state of a display screen when a system starts to work, and enter operation 602.

At operation 602, the electronic device detects whether the display screen is in a screen-on state. Specifically, the electronic device detects whether the display screen of a display module is in a screen-on state. Enter operation 603 when the display screen is in a screen-on state, otherwise enter operation 607.

At operation 603, the electronic device obtains the brightness level of the first area , where the first area includes pixels at the geometric center of the display area of the display screen. Enter operation 604.

At operation 604, the electronic device sequentially decreases brightness levels of columns of pixels in horizontal direction and brightness levels of rows of pixels in the vertical direction by a preset radio or in a preset arithmetic relationship from the brightness level of the first area , in the direction from the geometric center of the display area to the boundary of the display area. Enter operation 605.

At operation 605, the electronic device detects whether the brightness level of the first area is changed, such as whether the brightness level of the first area is increased or decreased. The brightness change of the first area may be a users' manual-adjustment of brightness level of the display screen or automatical-adjustment of brightness level of the display screen according to brightness level of the ambient light by the electronic device. Enter operation 606 if it is detected that the brightness level of the first area is changed, and otherwise, enter operation 607.

At operation 606, the electronic device adjusts the brightness level of the second area by a preset ratio according to change of the brightness level of the first area . Specifically, if the brightness level of the first area is increased, brightness levels of pixels in the second area is correspondingly increased. If the brightness level of the first area is decreased, the brightness levels of the pixels in the second area are correspondingly decreased. Enter operation 607.

At operation 607, a process of adjusting the brightness level of the display area of the display screen ends.

Adjusting the brightness levels of pixels near a respective boundary of the display area reduces brightness level of pixels close to the boundary of the display area, and reduces effect of light leakage at edges of the ink window area. This effectively solves the problem of light leakage easily occurring at the inner edge of the ink window area of the display module without black borders, and reduces the influence of the light leakage at edges of the ink window area of the display module on the display effect.

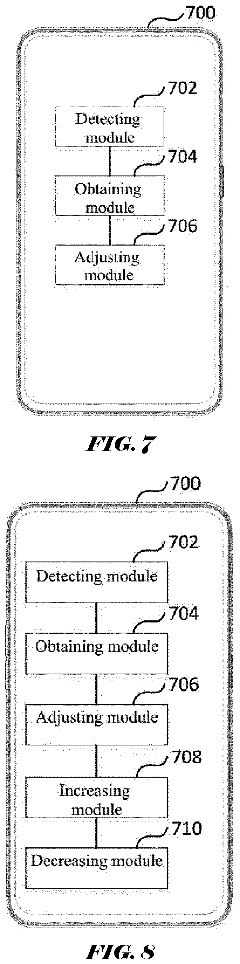

FIG. 7 is a structural block diagram of a display device according to some embodiments of the present disclosure. The device includes the following.

A detecting module 702 is configured to detect whether the display screen is in a screen-on state. The display screen has a display area, the display area includes a first area and a second area. The first area has a distance to a boundary of the display area greater than that of the second area, and the second area comprises at least part of pixels adjacent to the boundary of the display area.

An obtaining module 704 is configured to obtain a brightness level of the first area in response to the display screen being in the screen-on state.

An adjusting module 706 is configured to adjust the brightness of the second area to a target brightness level according to the brightness of the first area.

In some embodiments, the first area comprises pixels at a geometric center of the display area, and the second area comprises all pixels adjacent to the boundary of the display area.

In some embodiments, the second area comprises the same number of rows or columns of pixels at two opposite sides of the display area, and rows or columns at the two opposite sides are symmetrical along a symmetry axis or another symmetry axis of the display area.

In some embodiments, the second area comprises same rows and same columns of pixels at respective two opposite sides of the display area.

In some embodiments, the first area comprises preset pixels adjacent to the second area.

In some embodiments, the second area comprises at least three columns or rows of pixels, and the second area has a stepwise decrease on brightness levels of the at least three columns or rows in a direction from the geometric center of the display area to the boundary of the display area.

In some embodiments, the second area comprises the same number of columns and rows, and pixels in the second area that have a same distance to the boundary of the display area have a same brightness level.

In some embodiments, brightness levels of columns or rows of pixels in the second area are sequentially decreased in an order of time.

In some embodiments, the second area comprises the same number of columns and rows, and brightness levels of pixels in the second area that have a same distance to the boundary of the display area are decreased simultaneously.

In some embodiments, the brightness level of the first area and brightness levels of rows or columns in the second area is in an equal proportional relationship.

In some embodiments, the brightness level of the first area and brightness levels of rows or columns in the second area are in an arithmetic relationship.

FIG. 8 is a structural block diagram of a display device according to another some embodiments of the present disclosure. In some embodiments, the device further includes the following.

An increasing module 708 is configured to correspondingly increase the target brightness level in response to the brightness level of the first area being increased.

The decreasing module 710 is configured to correspondingly decrease the target brightness level in response to the brightness level of the first area being decreased.

The division of these modules in the above display device is only for illustration. In other embodiments, the display device may be divided into different modules as needed to complete all or part of the functions of the above display screen.

Specific limitations of the display device may be referred to the above limitations on the display method, which will not be repeated here. All or a part of these modules in the above display device may be implemented by software, hardware, or a combination thereof. The above modules may be embedded or independent of in a processor of the electronic device in the form of hardware, or may be stored in the memory in the electronic device in the form of software so that the processor can call and execute operations corresponding to the above modules.

The above display device may be implemented in the form of a computer program, and the computer program may run on the electronic device shown in FIG. 1.

Embodiments of the present disclosure also provide a computer-readable storage medium. One or more non-transitory computer-readable storage media contains computer programs. When the computer programs are executed by one or more processors, the processor perform the above operations.

A computer program product containing instructions, when run on a computer, causes the computer to perform operations of the display method described in the above embodiments.

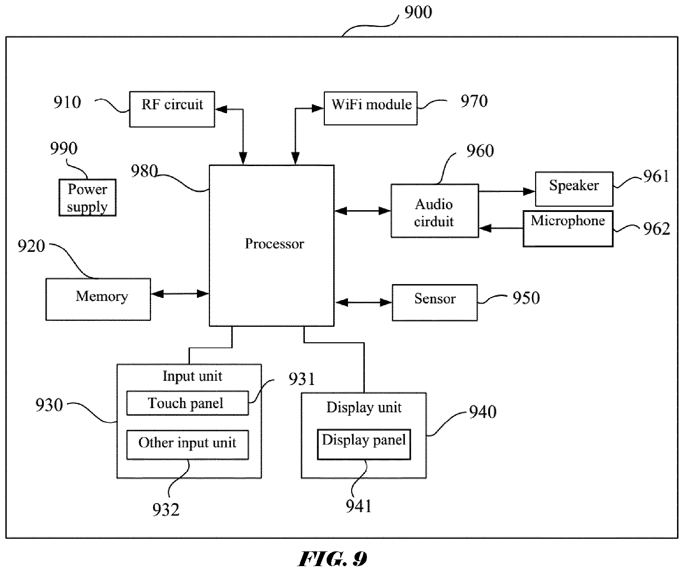

An electronic device is further provided in an embodiment of the present disclosure. As shown in FIG. 9, for the convenience of description, only the parts related to the embodiments of the present disclosure are shown. If the specific technical details are not disclosed, please refer to the method part of the embodiment of the present disclosure. The mobile terminal may be any terminal device including a mobile phone, a tablet computer, a PDA (Personal Digital Assistant), a POS (Point of Sales), an in-vehicle computer, a wearable device, and the like. The mobile terminal is used as a mobile phone as an example.

FIG. 9 is a block diagram showing a partial structure of a mobile phone related to a mobile terminal provided by an embodiment of the present disclosure. As shown in FIG. 9, the mobile phone includes a radio frequency (RF) circuit 910, a memory 920, an input unit 930, a display unit 940, a sensor 950, an audio circuit 960, a wireless fidelity (Wi-Fi) module 970, a processor 980, and a power supply 990. It will be understood by those skilled in the art that the structure of the mobile phone as shown in FIG. 9 does not constitute a limitation to the mobile phone, and may include more or less components than those illustrated, or some components may be combined, or different component arrangements.

The RF circuit 910 can be used for receiving and emitting information during the transmission and reception of information or during a call, and may receive downlink information of a base station for the processor 980 to process, and may also send uplink data to the base station. Usually, the RF circuit includes, but not limited to, an antenna, at least one amplifier, a transceiver, a coupler, a Low Noise Amplifier (LNA), a duplexer and so on. In addition, the RF circuit may further communicate with other devices via wireless communication and a network. The above wireless communication may use any communication standard or protocol, including but not limited to Global System of Mobile communication (GSM), General Packet Radio Service (GPRS), Code Division Multiple Access (Code Division), Multiple Access (CDMA), Wideband Code Division Multiple Access (WCDMA), Long Term Evolution (LTE), E-mail, Short Messaging Service (SMS), and the like.

The memory 920 may be configured to store software programs and modules, and the processor 980 executes various function applications and data processing of the mobile phone by running the software programs and the modules stored in the memory920. The memory 920 may mainly include a program storage region and a data storage region, wherein the program storage region may store an operation system, application programs for at least one function (for example, an application for an audio playing function, an application for an image playing function, etc.), and the data storage region may store data (for example, audio data, telephone directory, etc.) created according to use of the mobile phone. In addition, the memory 920 may include a high-speed RAM, and may further include a non-volatile memory such as at least one of a disk storage device, a flash device, or other non-volatile solid storage devices.

The input unit 930 may be configured to receive input digital or character information and generate key signal input associated with user setting and functional control of the mobile phone 900. Specifically, the input unit 930 may include a touch panel 931 and other input devices 932. The touch panel 931 may also be referred to as a touch screen, collect users' touch operations (such as operations on the touch panel 931 or near the touch panel 931 by using a user finger, a pen or any other suitable object or accessory) thereon or therenear, and drive a corresponding connection device according to a preset program. In some embodiments, the touch panel 931 may include a touch detection device and a touch controller. The touch detection device detects a location and direction of the user's touch operation, detects signals caused by the touch operation, and transmits the signal to the touch controller. The touch controller receives touch information from the touch detection device, converts the touch information into contact coordinates and then sends to the processor 980, and can receive and execute instructions sent by the processor 980. In addition, various types, such as resistive-type, capacitive-type, infrared, and surface acoustic wave, can be used to implement the touch panel 931. In addition to the touch panel 931, the input unit 930 may also include other input devices 932. Specifically, other input devices 932 may include, but is not limited to, one or more of a physical keyboard and function keys (such as volume control keys, switch keys, etc.).

The display unit 940 can be used to display information input by the user or information provided to the user as well as various menus of the mobile phone. The display unit 940 may include a display panel 941. In some embodiments, a Liquid Crystal Display (LCD), an Organic Light-Emitting Diode (OLED) are used to implement the display panel 941. In some embodiments, the touch panel 931 may cover the display panel 941. When the touch panel 931 detects touch operations thereon or therenear and transmits to the processor 980 to determine a type of the touch event. Then, the processor 980 provides corresponding visual outputs on the display panel 941 according to the type of the touch event. Although the touch panel 931 and the display panel 941 are implemented as two independent components to implement the input and output functions of the mobile phone in FIG. 9, in some embodiments, the touch panel 931 and the display panel 941 can be integrated to realize the input and output functions of the mobile phone.

The mobile phone 900 may also include at least one type of sensor 950, such as an optical sensor, a motion sensor, and other sensors. Specifically, the optical sensor may include an ambient light sensor and a proximity sensor, wherein the ambient light sensor may adjust the brightness of the display panel 941 according to the brightness of the ambient light, and the proximity sensor may turn off the display panel 941 and/or backlight when the mobile phone is moved to the ear. The motion sensor may include an accelerometer sensor. The accelerometer sensor can detect the magnitude of acceleration in all directions, detect the magnitude and direction of gravity when it is stationary, which can be used to identify the gesture of the mobile phone (such as horizontal and vertical screen switching, vibration recognition related functions (such as pedometer, tapping), etc. further, other sensors such as gyroscopes, barometers, hygrometers, thermometers, infrared sensors can be configured on the mobile phone.

An audio circuit 960, a speaker 961 and a microphone 962 may provide an audio interface between the user and the mobile phone. The audio circuit 960 can convert the received audio data to the electrical data and then emit to the speaker 961. The speaker 961 then converts to the sound signal. On the other hand, the microphone 962 converts the collected sound signal into an electrical signal. The audio circuit 960 receives the electrical signal and then convert it into audio data. The processor 980 processes the audio data and then transmits another mobile phone via the RF circuit 910, or transmits to the memory 920 for further processing.

Wi-Fi belongs to a short-range wireless transmission technology. The mobile phone may assist the user to receive and send e-mails, webpage browsing, access to streaming media and the like by means of the Wi-Fi module 970, which provides a wireless wideband internet access for the user.

The processor 980 is a control center of the mobile phone, which is connected to all parts of the mobile phone by utilizing various interfaces and lines, and executes various functions and processing data of the mobile phone by running or executing the software program and/or the module stored in the memory 920 and calling data stored in the memory 920. Thus, it wholly monitors the mobile phone. In some embodiments, the processor 980 may include one or more processing units. In some embodiments, the processor 980 may be integrated with an application processor and a modulation-demodulation processor. The application processor mainly processes an operation system, a user interface, an application program and the like, and the modulation-demodulation processor mainly processes wireless communication. It will be appreciated that the above described modulation-demodulation processor may also not be integrated into the processor 980.

The mobile phone 900 also includes a power supply 990 (such as a battery) that supplies power to the various components. Preferably, the power supply 990 can be logically coupled to the processor 980 through a power management system to manage functions such as charging, discharging, and power management through the power management system.

In some embodiments, the mobile phone 900 may further include a camera, a Bluetooth module, and the like.

In some embodiments, when the processor 980 included in the mobile terminal executes computer-executable instructions stored in the memory, the following operations are implemented.

Detecting whether the display screen is in a screen-on state. The display screen has a display area, the display area includes a first area and a second area. The first area has a distance to a boundary of the display area greater than that of the second area, and the second area comprises at least part of pixels adjacent to the boundary of the display area.

Obtaining a brightness level of the first area in response to a display screen being in the screen-on state.

Adjusting the brightness of the second area to a target brightness level according to the brightness of the first area.

In some embodiments, the first area comprises pixels at a geometric center of the display area, and the second area comprises all pixels adjacent to the boundary of the display area.

In some embodiments, the second area comprises the same number of rows or columns of pixels at two opposite sides of the display area, and rows or columns at the two opposite sides are symmetrical along a symmetry axis or another symmetry axis of the display area.

In some embodiments, the second area comprises same rows and same columns of pixels at respective two opposite sides of the display area.

In some embodiments, the first area comprises preset pixels adjacent to the second area.

In some embodiments, the second area comprises at least three columns or rows of pixels, and the second area has a stepwise decrease on brightness levels of the at least three columns or rows in a direction from the geometric center of the display area to the boundary of the display area.

In some embodiments, the second area comprises the same number of columns and rows, and pixels in the second area that have a same distance to the boundary of the display area have a same brightness level.

In some embodiments, brightness levels of columns or rows of pixels in the second area are sequentially decreased in an order of time.

In some embodiments, the second area comprises the same number of columns and rows, and brightness levels of pixels in the second area that have a same distance to the boundary of the display area are decreased simultaneously.

In some embodiments, the brightness level of the first area and brightness levels of rows or columns in the second area is in an equal proportional relationship.

In some embodiments, the brightness level of the first area and brightness levels of rows or columns in the second area are in an arithmetic relationship.

In some embodiments, the method further includes the following.

Correspondingly increasing the target brightness level in response to the brightness level of the first area being increased.

Correspondingly decreasing the target brightness level in response to the brightness level of the first area being decreased.

Embodiments of the present disclosure also provides a computer program product. The computer program product containing instructions, when run on a computer, causes the computer to perform operations of the display method described in the above embodiments.

Any reference to a memory, a storage, a database, or other medias herein may include non-transitory and / or transitory memory. Suitable non-transitory memory may include read-only memory (ROM), programmable ROM (PROM), electrically programmable ROM (EPROM), electrically erasable programmable ROM (EEPROM) or flash. Transitory memories can include random access memory (RAM), which is used as external cache memory. By way of illustration and not limitation, RAM is available in various forms, such as static RAM (SRAM), dynamic RAM (DRAM), synchronous DRAM (SDRAM), dual data rate SDRAM (DDR SDRAM), enhanced SDRAM (ESDRAM), Synchlink DRAM(SLDRAM), Rambus direct RAM (RDRAM), direct memory bus dynamic RAM (DRDRAM), and memory bus dynamic RAM (RDRAM).

The above-mentioned embodiments are merely illustrative of several embodiments of the present disclosure, and the description thereof is more specific and detailed, but is not to be construed as limiting the scope of the claims. It should be noted that a number of variations and modifications may be made by those skilled in the art without departing from the spirit and scope of the present disclosure. Therefore, the scope of the present disclosure should be determined by the appended claims.

## Claims

1. A display method, comprising:
obtaining a brightness level of a first area in response to a display screen being in a screen-on state; wherein the display screen has a display area comprising the first area and a second area, the first area has a distance to a boundary of the display area greater than that of the second area, and the second area comprises at least part of pixels adjacent to the boundary of the display area; and
adjusting a brightness level of the second area to a target brightness level according to the brightness level of the first area.

2. The method as claimed in claim 1, wherein the first area comprises pixels at a geometric center of the display area, and the second area comprises all pixels adjacent to the boundary of the display area.

3. The method as claimed in claim 1, wherein the second area comprises the same number of rows or columns of pixels at two opposite sides of the display area, and rows or columns at the two opposite sides are symmetrical along a symmetry axis or another symmetry axis of the display area.

4. The method as claimed in claim 3, wherein the second area comprises same rows and same columns of pixels at respective two opposite sides of the display area.

5. The method as claimed in claim 1, wherein the first area comprises preset pixels adjacent to the second area.

6. The method as claimed in claim 1, wherein the second area comprises at least three columns or rows of pixels, and the second area has a stepwise decrease on brightness levels of the at least three columns or rows in a direction from the geometric center of the display area to the boundary of the display area.

7. The method as claimed in claim 6, wherein the second area comprises the same number of columns and rows, and pixels in the second area that have a same distance to the boundary of the display area have a same brightness level.

8. The method as claimed in claim 6, wherein brightness levels of columns or rows of pixels in the second area are sequentially decreased in an order of time.

9. The method as claimed in claim 8, wherein sequentially-decreasing brightness levels columns or rows of pixels in the second area in the order of time comprises:
sequentially-decreasing brightness levels of columns in a horizontal direction at a first preset time interval according to the brightness of the first area; and
sequentially-decreasing brightness levels of rows in a vertical direction at a second preset time interval according to the brightness of the first area.

10. The method as claimed in claim 8, wherein the second area comprises the same number of columns and rows, and brightness levels of pixels in the second area that have a same distance to the boundary of the display area are decreased simultaneously.

11. The method as claimed in claim 6, wherein the brightness level of the first area and brightness levels of rows or columns in the second area is in an equal proportional relationship.

12. The method as claimed in claim 6, wherein the brightness level of the first area and brightness levels of rows or columns in the second area are in an arithmetic relationship.

13. The method as claimed in claim 1 or 2, further comprising:
increasing the target brightness level in response to the brightness level of the first area being increased; and
decreasing the target brightness level in response to the brightness level of the first area being decreased.

14. The method as claimed in any one of claims 1 to 5, wherein brightness levels of rows or columns of pixels in the second area are sequentially decreased in the direction from the geometric center of the display area to the boundary of the display area.

15. The method as claimed in any one of claims 1 to 5, wherein the target brightness level is a preset ratio of the brightness of the first area that is decreased from the brightness level of the first area.

16. The method as claimed in any one of claims 1 to 5, wherein the target brightness value is a preset fixed level decreased from the brightness level of the first area is decreased.

17. The method as claimed in any one of claims 1 to 12, wherein the obtaining the brightness level of the first area comprises:
obtaining brightness levels of all pixels in the first area one by one, wherein an average of the brightness levels of all pixels in the first area is set as the brightness level of the first area.

18. A display device, comprising:
an obtaining module, configured for obtaining a brightness level of a first area when a display screen is in a screen-on state; wherein the display screen has a display area comprising the first area and a second area, the first area has a distance to a boundary of the display area greater than that of the second area, and the second area comprises at least part of pixels adjacent to the boundary of the display area; and
an adjusting module, configured for adjusting a brightness level of the second area to a target brightness value according to the brightness of the first area.

19. An electronic device comprising a processor and a memory storing a computer program, when executed by the processor, causing the processor to perform a method of any one of claims 1-17.

20. A computer-readable storage medium storing a computer program, when executed by a processor, achieving a method of any one of claims 1-17.
